# EUROPÄISCHE PATENTSCHRIFT

(11) **EP 2 374 639 B1**
(45) Veröffentlichungstag und Bekanntmachung des Hinweises auf die Patenterteilung: **19.06.2013**
(21) Anmeldenummer: 10159613.8
(22) Anmeldetag: 12.04.2010
(51) Int. Cl.: B60G 21/05, B60G 11/14, B60G 3/00, B60G 9/00, B60G 11/00

(54) **Hinterradaufhängung deren Schraubenfeder eine geneigt angeordnete Kraftwirkungslinie aufweist**
Rear wheel suspension with coil springs with an inclined reaction force axis
Suspension de roue arrière dont les ressorts cylindriques comprennent une ligne de force agencée de manière inclinée

(43) Veröffentlichungstag der Anmeldung: 12.10.2011
(73) Patentinhaber: Ford Global Technologies, LLC, Dearborn, MI 48126 (US)
(72) Erfinder: Carlitz, Andreas, 52224, Stolberg (DE); Glorer, Jens, 50259, Pulheim (DE); Küppers, Theo, 52525, Waldfeucht (DE)
(74) Vertreter: Drömer, Hans-Carsten

(56) Entgegenhaltungen:
- EP-A1- 0 930 183
- EP-B1- 0 319 651
- DE-A1- 3 108 482
- DE-A1- 3 233 878
- DE-A1-102007 051 470
- FR-A1- 2 793 734
- JP-A- 8 142 622
- JP-A- 2000 351 311
- JP-A- 2003 211 930
- US-A1- 2003 111 781

## Beschreibung

Die Erfindung betrifft eine Hinterradaufhängung gemäß dem Oberbegriff des Anspruchs 1, welche eine Feder, in der bevorzugten Ausgestaltung als Schraubenfeder aufweist, die eine geometrische Federmittellinie und eine Kraftwirkungslinie aufweist, wobei die Schraubenfeder in einem oberen und unteren Federlager gelagert ist, wobei ein kurvenäußeres Rad bzw. die zugeordnete Schraubenfeder bei einer Kurvenfahrt einfedert, und ein kurveninneres Rad bzw. die zugeordnete Schraubenfeder ausfedert.

Derartige Hinterradaufhängungen sind zum Beispiel als Verbundlenkerachsen bekannt.

Die FR 2793734 offenbart keine Schraubenfeder als Bestandteil einer Verbundlenkerachse im Sinne der Erfindung. Die DE 10 2007 051 470 A1 offenbart keine Verbundlenkerachse mit einer Schraubenfeder im Sinne der Erfindung sondern eine sich in Querrichtung erstreckende Blattfeder.

Die JP 2003- 211930 offenbart eine gattungsgemäße Hinterradaufhängung, wobei die JP 2000-351311 A ein winklig angestelltes unteres Federlager als ein an einem Außenumfang der Schraubenfeder angreifendes Führungselement offenbart.

Die DE 31 08 482 A1 offenbart lediglich dass die Längslenker über Schraubenfedern abgestützt sind, wobei die Dorne als Führungselement Einsatz finden, welche in das Federauge eingreifen.

Die EP 0 930 183 A1 befasst sich mit einer Hinterradaufhängung, wobei Dorne vorgesehen sind, die in die Federaugen eingreifen. Die DE 32 33 878 A1 befasst sich mit dem Problem, das Dämpferbein biegemomentenfrei zu halten, wozu eine Schraubenfeder um das Dämpferbein herum benutzt wird.

Die DE 10 2004 058 698 B3 beschreibt eine Radaufhängung, bzw. ein aktives Fahrwerk, umfassend einen Fahrzeugaufbau, ein an diesem über eine Lenkeranordnung beweglich angelenktes Rad mit einem Radträger und zumindest einer Schraubendruckfeder, die sich am Fahrzeugaufbau einerseits und am Radträger oder der Lenkeranordnung andererseits abstützt. Die auf einen Aufstandspunkt des Rades bezogene Federsteifigkeit der Fahrzeugaufbauabstützung soll gesteuert veränderbar sein. Dabei wird eine Schraubendruckfederanordnung verwendet, deren Kraftwirkungslinie von der geometrischen Federmittellinie abweicht. Mittels Verdrehmitteln wird die Kraftwirkungslinie räumlich gegenüber der geometrischen Mittellinie verstellt. So kann unter anderem an der Hinterachse des Fahrzeuges ein Lastausgleich bewirkt werden, wenn das Kraftfahrzeug beladen wird. Mit anderen Worten wird das Kraftfahrzeug an seinem Heck in seinem Niveau ausgeglichen, wenn die Kraftwirkungslinie räumlich zur Federmittellinie verdreht wird. Wesentlich bei der DE 10 2004 058 698 B3 ist, dass die Schraubendruckfedern der beiden Fahrzeugseiten getrennt, also auch aktiv ansteuerbar sind. In einem Ausführungsbeispiel beschreibt die DE 10 2004 058 698 B3, dass eine Schraubendruckfeder als Bestandteil eines McPherson-Federbeins, also einer Vorderradaufhängung, schräg angestellt sein kann. Dies löst aber lediglich das Problem, schädigende Kräfte von dem Führungselement bzw. dem Kolben des Federbeins fernzuhalten, was auch so in der DE 699 08 502 T2 offenbart ist. Die DE 10 2004 058 698 B3 lehrt weiter, dass die Schraubendruckfedern an der Hinterradaufhängung senkrecht angeordnet sind.

In der DE 699 08 502 T2 (= EP 0 976 591 B1) wird eine Vorderradaufhängung beschrieben, welche ein Federbein und eine dieses umfassende Schraubendruckfeder aufweist, die in einem unteren Sitz an dem Federbein und in einem oberen Sitz an der Fahrzeugkarosserie befestigt ist. Die Schraubendruckfeder hat eine Windungsachse, welche im unbelasteten Zustand mit einem festgelegten Krümmungsradius gekrümmt ist. Die Schraubendruckfeder ist C-förmig ausgeführt bzw. C-förmig zwischen den beiden Lagerstellen eingespannt. So soll eine Reduzierung der auf den Führungsabschnitt des Federbeins und dessen Kolben wirkenden Seitenkraft erreicht werden.

Die WO 2009/124658 offenbart eine gegenlenkende Fahrzeug-Hinterachse, die unter Einwirkung einer Seitenkraft auf das an einem Radträger befestigte kurvenäußere Rad eine Drehbewegung dieses Radträgers um eine virtuelle Spreizachse in Richtung Vorspur veranlasst, wobei der Radträger über Stützelemente an einem sich im Wesentlichen in Fahrzeuglängsrichtung erstreckenden Längsträger abgestützt ist. Die WO 2009/124658 geht von Verbundlenkerachsen aus, welche unter Seitenkrafteinfluss, also z.B. bei Kurvenfahrten eine Übersteuertendenz aufweisen können, weswegen eine Achse zur Verfügung gestellt werden soll, die allgemeinen Festigkeitsanforderungen genügt. Hiezu schlägt die WO 2009/124658 vor, dass oberhalb und unterhalb eines Radmittelpunktes jeweils zwei torsionsweiche, aber biegesteife Stützelemente vorgesehen sind, die in einer seitlichen Projektion wie die virtuelle Spreizachse im Wesentlichen gleichermaßen gegenüber der Vertikalrichtung geneigt sind, wobei ein oberes, sich im wesentlichen in Fahrzeug-Querrichtung nach innen erstreckendes Anbindungs-Stützelement einerseits am Radträger und andererseits an einem oberen Torsions-Stützelement abgestützt ist, wobei das obere Torsions-Stützelement mit seinem anderen Ende am Achskörper abgestützt ist, und wobei ein unteres, sich im wesentlichen in Vertikalrichtung erstreckendes Anbindungs-Stützelement einerseits am Radträger und andererseits an einem unteren Torsions-Stützelement abgestützt ist, wobei das untere Torsions-Stützelement mit seinem anderen Ende am Achskörper abgestützt ist.

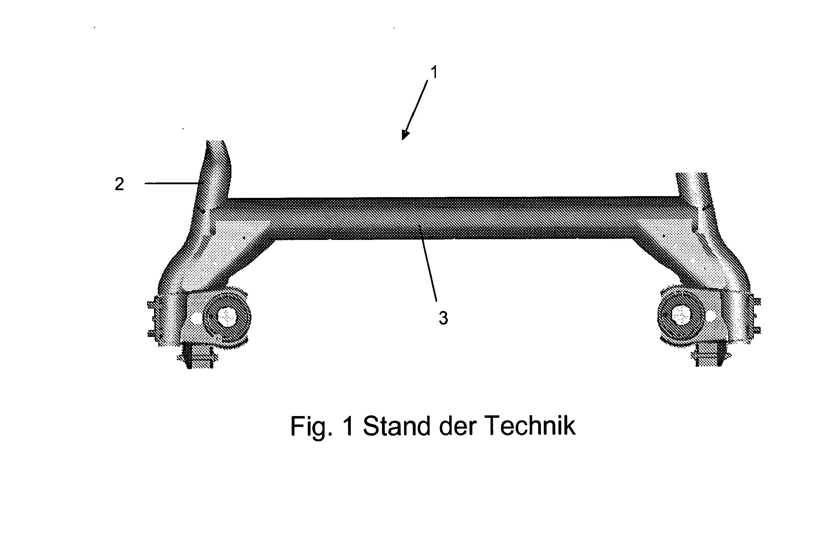

Insbesondere bei Kurvenfahrten des Kraftfahrzeuges werden an dem kurveninneren und dem kurvenäußeren Rad erhebliche Seitenkräfte wirksam, welche von der Hinterradaufhängung, bzw. deren Komponenten aufgenommen werden müssen. Bekannt ist, dass diese Seitenkräfte von entsprechenden Lagern bzw. Lagerbuchsen aufgenommen werden, welche einerseits steif genug sein sollten, um ein Übersteuern zu vermeiden. Andererseits sollten die Lager bzw. Lagerbuchsen weich genug sein, um entsprechenden Fahrkomfort erreichen zu können. Um einen Nachspureffekt der Hinterradaufhängung zu reduzieren, kann vorgesehen sein, die Lager bzw. Lagerbuchsen geneigt anzuordnen, wie zum Beispiel der Figur 1 zum Stand der Technik entnommen werden kann.

Figur 1 zeigt eine Hinterradaufhängung 1 in der Ausgestaltung als Verbundlenkerachse. Die Hinterradaufhängung 1 besteht aus zwei gezogenen Längsschwingen 2, die vorn nahe ihrer Drehachse durch ein eingeschweißtes Profil 3 verbunden sind. Das Profil 3 hat typischerweise einen U- oder T-förmigen Querschnitt und ist so bemessen, dass es sich bei einseitigem Ein- und Ausfedern verdreht und als Stabilisator wirkt. Bei der ähnlich aufgebauten Koppellenkerachse sind die Längslenker etwa in deren Mitte über ein unten offenes U-Profil mit eingeschweißtem Torsionsrohr verbunden. Verbindet das Profil die Längslenker an ihrem Ende, spricht man von einer Torsionskurbelachse.

Ein Nachspureffekt resultiert aus der Nachgiebigkeit der Strukturelemente der Radaufhängung unter Einwirkung von Seitenkräften bei Kurvenfahrt. Die Nachgiebigkeit der Strukturteile und eine spurkorrigierende Verschiebung der Achse führt jedoch zu einem trägen Fahrgefühl, das vom Fahrzeugführer und von den Fahrzeuginsassen als nachteilig wahrgenommen wird. Insofern müssen die einzelnen Komponenten bzw. Strukturelemente der Hinterradaufhängung gegen diese Nachgiebigkeit, also gegen dieses Ausweichen ausgelegt werden, also in ihrer Dimension angepasst werden. Dies bedingt, eine sich nachteilig auf das Gewicht des Fahrzeuges bzw. der Hinterradaufhängung auswirkende Gewichtserhöhung, wenn z.B. Materialstärken entsprechend angepasst werden müssen. Mehr Gewicht bedeutet aber z.B. auch ein mehr an Kraftstoffverbrauch.

Bekannt ist aber auch, zusätzlich ein so genanntes Watt-Gestänge an der Verbundlenkerachse vorzusehen, wie dies z.B. in der DE 10 2008 045 817 A1 offenbart ist. Mit dem zusätzlichen Watt-Gestänge, können die Lagerbuchsen weicher ausgeführt werden, um den Fahrkomfort zu erhöhen, wobei Seitenkräfte von dem zusätzlichen Watt-Gestänge aufgenommen werden können. Allerdings belastet das zusätzliche Watt-Gestänge das Fahrzeug bzw. die Hinterradaufhängung mit zusätzlichem Gewicht, auch wenn die einzelnen Komponenten der Hinterradaufhängung entsprechend angepasst ausgelegt werden können. Zudem benötigt das zusätzliche Watt-Gestänge zusätzlichen Einbauraum, welcher nur bedingt zur Verfügung steht. So müssen beispielsweise Kompromisse bezüglich des Raumangebotes eines Kofferraumes also z.B. bezüglich der Anordnung eines Reserverades gefunden werden. Auch wird zusätzlich zu den zusätzlichen Einbauteilen des Watt-Gestänges ein zusätzlicher akustischer Pfad erzeugt, wobei entstehende Geräusche von den Fahrzeuginsassen durchaus als störend empfunden werden können.

Der Erfindung liegt daher die Aufgabe zugrunde, eine Hinterradaufhängung der Eingangs genannten Art mit einfachen Mitteln so zu verbessern, dass diese z.B. in ihrem Gewicht und in ihrer Nachgiebigkeit verbessert ist, ohne dass zusätzliche Komponenten verwendet werden müssen, so dass auch der notwendige Einbauraum nicht vergrößert ist.

Erfindungsgemäß wird die Aufgabe durch eine Hinterradaufhängung mit den Merkmalen des Anspruchs 1 gelöst, wobei die Feder in der erfindungsgemäßen Ausgestaltung als Schraubenfeder so ausgeführt und angeordnet ist, dass deren Kraftwirkungslinie bei einem Einfedern einen Neigungsbetrag aufweist, welcher zu einem Neigungsbetrag bei einem Ausfedern unterschiedlich ist. Bevorzugt ist der Neigungsbetrag bei einem Einfedern größer als bei einem Ausfedern. Mit anderen Worten ist die Feder so angeordnet und ausgeführt, dass deren Kraftwirkungslinie bei einem Einfedern stärker in Richtung zur Horizontalen geneigt ist, als bei einem Ausfedern, wobei die Kraftwirkungslinie in beiden Situationen, also sowohl am kurveninneren als auch am kurvenäußeren Rad bezogen auf die Horizontale und auf die Vertikale dennoch geneigt ist. Bei einem Ausfedern richtet sich die Kraftwirkungslinie also auf, wobei sich der Abstand des oberen Federlagers zum unteren Federlager bei einem Ausfedern vergrößert. Selbstverständlich federt das kurveninnere Rad, bzw. die dortige Feder aus, wobei bei Kurvenfahrt gleichzeitig das kurvenäußere Rad, bzw. die dortige Feder einfedert, so dass an der kurveninneren Seite von der Feder, aber auch von den Rädern Seitenkraftbeträge erzeugt werden , welche geringer sind als an der kurvenäußeren Seite, worauf weiter unten näher eingegangen wird.

Im Folgenden wird die Feder in ihrer erfindungsgemäßen Ausgestaltung als Schraubenfeder als solche bezeichnet.

Die Kraftwirkungslinie weist erfindungsgemäß einen oberen Durchstoßpunkt und einen unteren Durchstoßpunkt auf. Mit dem oberen Durchstoßpunkt schneidet die Kraftwirkungslinie das obere Federlager. Mit dem unteren Durchstoßpunkt schneidet die Kraftwirkungslinie das untere Federlager. Bezogen auf die Federmittellinie sind der obere und untere Durchstoßpunkt also auf gegenüberliegenden Seiten der Federmittellinie angeordnet, wenn die Schraubenfeder z.B. einfedert oder ausfedert.

Vorteilhaft ist die Kraftwirkungslinie der Schraubenfeder geneigt angeordnet, so dass bei einer Kurvenfahrt des Fahrzeuges eine Seitenkraft erzeugt wird, welche den Seitenkräften des jeweiligen Rades entgegenwirkt. Da die Schraubfeder, diese gegen wirkende Seitenkraft generiert und aufnimmt, können Komponenten bzw. Strukturelemente der Hinterradaufhängung in ihrer Dimension reduziert werden, da diese gegen entsprechend geringere Belastung auslegbar sind. Vorteilhaft kann so eine Gewichtsreduzierung erreicht werden, welche sich unmittelbar auf einen geringeren Kraftstoffverbrauch auswirkt. Zudem werden keine zusätzlichen Komponenten, wie z.B. ein Watt-Gestänge benötigt, wodurch auch der benötigte Bauraum nicht nachteilig beeinflusst wird, denn erfindungsgemäß wird die Schraubenfeder in einfachster Ausgestaltung lediglich geneigt montiert, bzw. wird die Schraubenfeder so angeordnet, dass deren Kraftwirkungslinie geneigt angeordnet ist, um Seitenkräfte zu generieren, welche den Seitenkräften des jeweiligen Rades entgegen wirken.

In erfindungsgemäßer Ausgestaltung kann demnach einfach vorgesehen sein, die Schraubenfeder der Hinterradaufhängung zwischen ihrem oberen und unteren Federlager geneigt zu montieren, so dass sich die entsprechend geneigte Kraftwirkungslinie ergibt. Bevorzugt ist, wenn die Schraubenfeder mit ihrem oberen Ende von dem Rad weg orientiert, und mit ihrem unteren Ende in Richtung zum Rad orientiert ist. Denkbar ist aber auch, obere und untere Federlager entsprechend auszuführen, so dass die Schraubenfeder bzw. deren Kraftwirkungslinie geneigt ist.

Erfindungsgemäß ist die Schraubenfeder so angeordnet und ausgeführt ist, dass der obere Durchstoßpunkt bezogen auf den unteren Durchstoßpunkt näher an der geometrischen Federmittellinie angeordnet ist, als der untere Durchstoßpunkt, wenn die Schraubenfeder z.B. ausfedert oder einfedert, so dass eine asymmetrische Druckverteilung erzeugt wird, welche den Seitenkräften der Räder gegen wirkende Seitenkräfte erzeugt.

In bevorzugter Ausgestaltung ist die Hinterradaufhängung als Verbundlenkerachse ausgeführt, wobei jedem (hinteren) Rad zumindest eine Schraubenfeder zugeordnet ist, deren Kraftwirkungslinien bezogen auf deren jeweils oberen Durchstoßpunkt durch das jeweils obere Federlager auf einander zu orientiert sind. Insofern ist zweckmäßiger Weise vorgesehen, dass die jeweiligen Schraubenfedern des jeweiligen Rades der Hinterradaufhängung bzw. der Verbundlenkerasche bezogen auf eine Vertikalachse entgegengesetzt geneigt sind, also mit ihrem jeweils oberen Ende auf einander zu orientiert sind, bevorzugt aber einen gleichen Neigungsbetrag aufweisen, wenn die Schraubenfeder weder ein- noch ausfedert.

Üblicher Weise ist die Schraubenfeder in ihrem unteren und oberen Federlager von einem Führungselement geführt. Bekannt ist, das Führungselement als Dorn auszuführen, welcher in das untere bzw. in das obere Federauge eingreift. Bei der Erfindung dagegen kann vorgesehen sein, das Führungselement an einem Außenumfang der Schraubenfeder angreifen zu lassen. Vorteilhaft kann so zum Beispiel der untere Federteller, bzw. das untere Federlager winklig angestellt werden. Bei dieser Ausgestaltung wandert der untere Federteller bei einer Kurvenfahrt an der kurvenäußeren Seite quasi nach innen, wodurch sich der Abstand vom oberen Federlager zum unteren Federlager an der Kurvenaußenseite reduziert, so dass die Schraubenfeder komprimiert wird, was bewirkt, dass sich die Kraftwirkungslinie zunehmend in Richtung zur Horizontalen neigt. So können Seitenkräfte generiert werden, welche den Seitenkräften des Rades entgegen wirken.

Ein weiterer, vorteilhafter Effekt des angestellten Federtellers ist darin zu sehen, dass eine Druckpunktverschiebung im unteren Federauge relativ zur geometrischen Federmittelinie vergrößert wird.

Mit der Erfindung wird eine Hinterradaufhängung, beispielsweise eine Verbundlenkerachse zur Verfügung gestellt, bei welcher die Schraubenfeder eine geneigte Kraftwirkungslinie aufweist, um bei einer Kurvenfahrt Seitenkräfte zu generieren, welche den Seitenkräften der jeweiligen Räder entgegenwirken. Dadurch können die Strukturelemente der Hinterradaufhängung bzw. der Verbundlenkerachse gegen geringere Belastungen ausgelegt werden, denn die Schraubenfeder bewirkt, dass von ihr aufgenommen Kräfte von den Strukturelementen der Hinterradaufhängungen ferngehalten werden, was sich vorteilhaft auf ein geringeres Gewicht auswirkt, ohne dass zusätzliche Bauteile verwendet werden müssten. Durch die erfindungsgemäße Maßnahme wird zudem eine Hinterradaufhängung erreicht, welche eine geringere Nachgiebigkeit aufweist, wodurch das Fahrzeug selbst direkter reagiert. Natürlich kann dies z.B. auch mit einem zusätzlichen Watt-Gestänge erreicht werden, welches entgegen dem Ziel der Erfindung aber zusätzliche Belastungen erzeugt und zusätzlichen Bauraum benötigt.
- Figur 1: zeigt eine Hinterradaufhängung nach dem Stand der Technik. Weitere vorteilhafte Ausgestaltungen der Erfindung sind in den Unteransprüchen und der folgenden Figurenbeschreibung offenbart. Es zeigen:
- Fig. 2: eine Hinterradaufhängung nach der Erfindung in einer prinzipiellen, perspektivischen Ansicht,
- Fig. 3 und 4: in prinzipieller Ansicht Reaktionen der Hinterradaufhängung an der jeweiligen Kurvenaußen- und Kurveninnenseite der Hinterradaufhängung,
- Fig. 5: eine Einzelheit der Hinterradaufhängung nach Figur 1 bei einem Ausfedern,
- Fig. 6: eine Einzelheit der Hinterradaufhängung nach Figur 1 bei einem Einfedern,
- Fig. 7 bis Fig. 12: Ergebnisse einer bekannten Hinterradaufhängung im Vergleich zu einer erfindungsgemäßen Hinterradaufhängung, bzw. jeweilige Graphen der Radbewegung bezogen auf Seitenkräfte, Seitenversatz, Spur und Sturz.

In den unterschiedlichen Figuren sind gleiche Teile stets mit denselben Bezugszeichen versehen, weswegen diese in der Regel auch nur einmal beschrieben werden.

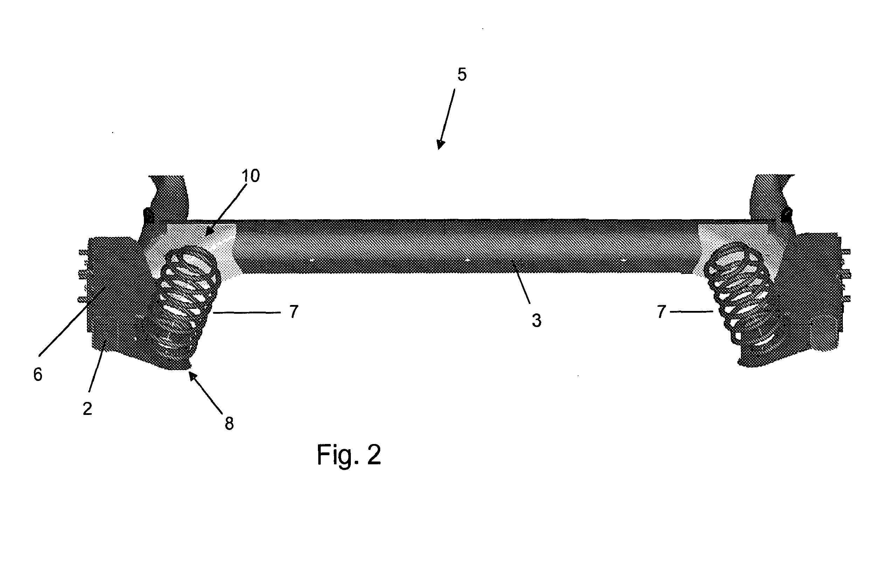

Figur 2 zeigt eine Hinterradaufhängung 5 welche wie zu Figur 1 nach dem Stand der Technik beschrieben beispielhaft als Verbundlenkerachse 5 ausgeführt ist. Die Verbundlenkerachse 5 weist einem jeden Radträger 6 zugeordneten Längsschwingen 2 auf. Die Längsschwingen 2 sind über ein Profil 3 miteinander verbunden. Die Längsschwingen 2 und das Profil 3, bzw. Strukturelemente der Hinterradaufhängung 5 können unterschiedlichste Ausgestaltungen aufweisen, worauf nicht weiter eingegangen wird.

An den Längsschwingen 2 sind noch Lagerbuchsen angeordnet, welche nicht dargestellt sind.

Jeder Längsschwinge 2 ist eine Feder 7 in der bevorzugten Ausgestaltung Schraubenfeder 7 zugeordnet, welche sich einerseits, also mit ihrem unteren Ende 8 an der jeweiligen Längsschwinge 2 und andererseits, also mit ihrem oberen Ende 10 z.B. an einem nicht dargestellten Fahrzeugaufbau abstützt. Die Feder 7 wird im Folgenden als Schraubenfeder 7 bezeichnet.

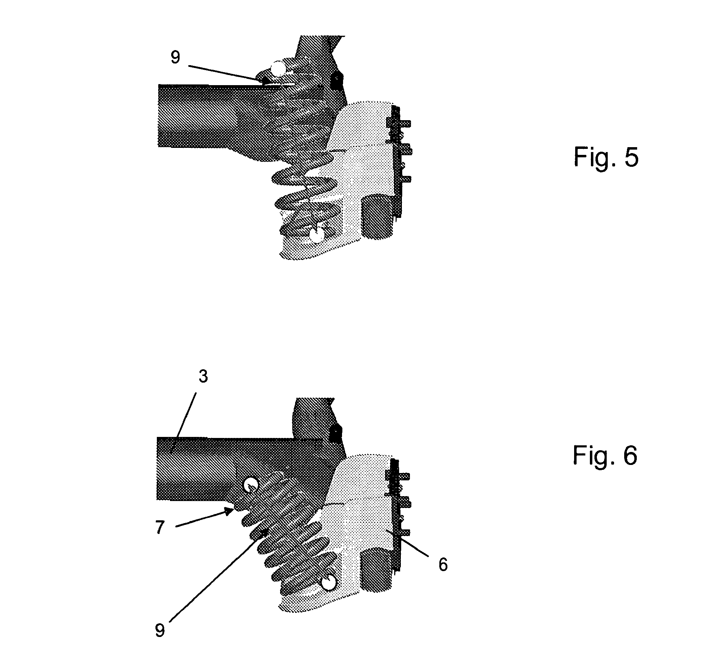

Wesentlich ist, dass die jeweilige Schraubenfeder 7 so angeordnet ist, dass deren Kraftwirkungslinie 9 (siehe Figuren 5 und 6) bei einem Einfedern (Figur 6) einen Neigungsbetrag aufweist, welcher zu einem Neigungsbetrag bei einem Ausfedern (Figur 5) unterschiedlich ist. Bevorzugt ist der Neigungsbetrag der Kraftwirkungslinie 9 bei einem Einfedern größer als bei einem Ausfedern. Wie beispielhaft dargestellt, sind die Schraubenfedern 7 einer jeden Fahrzeugseite entgegen gesetzt aufeinander zu orientiert, wobei das jeweils obere Ende 10 nach innen, also von dem Radträger 6 weg orientiert geneigt ist (Figur 2).

Das in den Figuren 5 und 6 dargestellten Einfedern und Ausfedern ist anhand einer gleichen Seite der Hinterradaufhängung 5 dargestellt. Selbstverständlich federt die dazu gegenüberliegende Seite der Hinterradaufhängung 5 entweder Aus oder Ein. Deutlich ist im Vergleich der Figuren 5 und 6 aber erkennbar, dass der Neigungsbetrag der Kraftwirkungslinie 9 bei dem Einfedern größer ist als bei dem Ausfedern, was so analog auch für die (nicht dargestellte) gegenüberliegende Seite, der entgegengesetzt orientierten Schraubenfeder 7 gilt.

Die in den Figuren dargestellte Schraubenfeder 7 weist einen zylindrisch ausgeführten Außenumfang auf. Natürlich kann die Schraubenfeder 7 auch gebogen montiert sein, also zum Beispiel C-Förmig oder S-Förmig ausgeführt bzw. entsprechend montiert sein. Denkbar ist auch, unterschiedliche Drahtdicken z.B. bezogen auf Innen- bzw. Außenseiten vorzusehen. Diese Ausgestaltungsbeispiele sollen natürlich nicht beschränkend sein. Wesentlich ist, dass die Schraubenfeder 7 bei einem Ein- bzw. Ausfedern Seitenkräfte erzeugt, welche den Seitenkräften der Räder entgegengerichtet sind, so dass die Strukturelemente der Hinterradaufhängung 5 um diesen Betrag der "Federseitenkraft" entlastet wird, ohne dass zusätzliche Bauteile benötigt würden.

Wesentlich ist also, dass mittels der geneigt angeordneten Kraftwirkungslinie 9 eine Seitenkraft generiert wird, welche den Seitenkräften der Räder entgegenwirkt, wenn das Fahrzeug eine Kurve durchfährt, so dass die Strukturelemente der Hinterradaufhängung bzw. der Verbundlenkerachse bezüglich reduzierter Belastungen im Vergleich zu einer nicht geneigt angeordneten Kraftwirkungslinie 9 dimensioniert werden können.

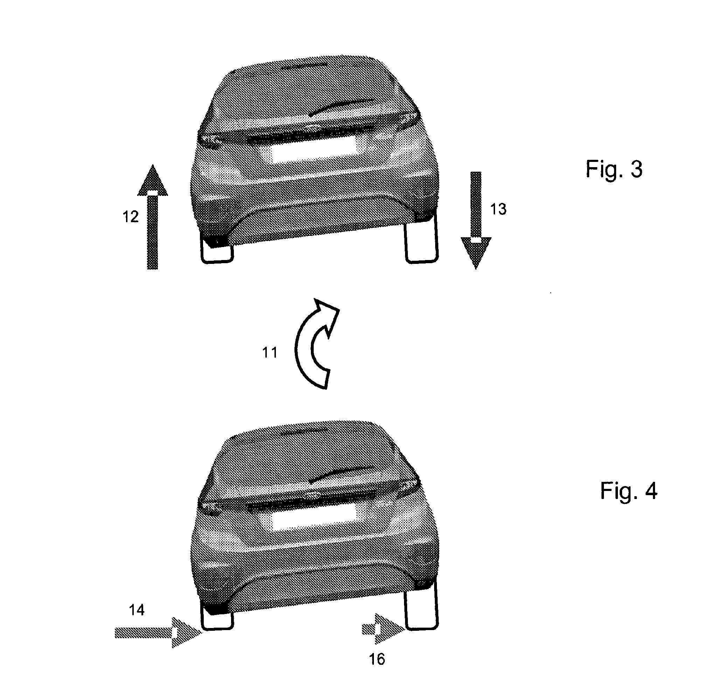

In den Figuren 3 und 4 ist beispielhaft die Reaktion der Hinterradaufhängung 5 gezeigt, wenn das Fahrzeug eine Kurve (Kurvenpfeil 11) durchfährt.

In Figur 3 ist erkennbar, dass das kurvenäußere Rad einfedert (linke Bildseite), wobei das kurveninnere Rad ausfedert (rechte Bildseite). Das Ein- bzw. Ausfedern ist mittels gegen orientierter Pfeile 12 (Einfedern) und 13 (Ausfedern) erkennbar. Das jeweilige Rad kann einen Radweg von mehreren Millimetern z.B. jeweils von 0 bis 65 mm ausführen. In Figur 4 sind die entstehenden Seitenkräfte der Räder mit den Pfeilen 14 und 16 dargestellt. An der Kurvenaußenseite (linke Bildseite) ist der Pfeil 14 größer gezeichnet, als der Pfeil 16 an der Kurveninnenseite, da an der Kurvenaußenseite größere Seitenkräfte entstehen als an der Kurveninnenseite.

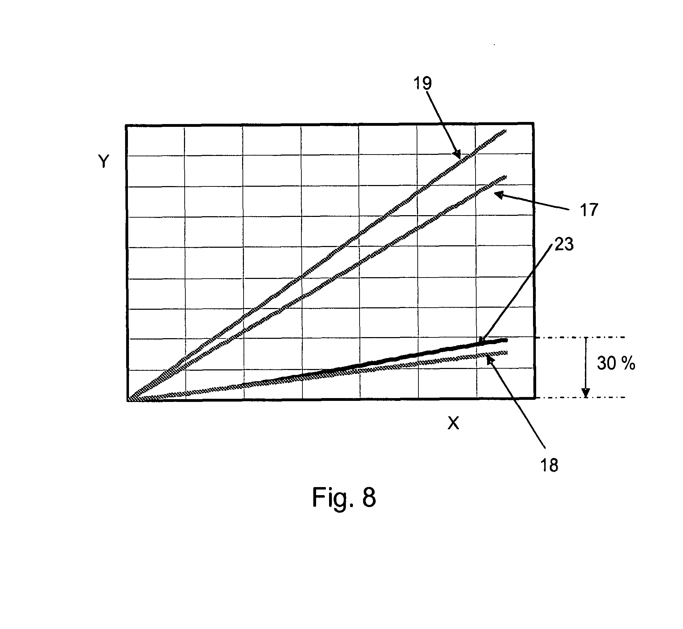

Die entstehenden Seitenkräfte der Räder einer konventionellen Verbundlenkerachse sind in dem Graphen nach Figur 8 dargestellt. Der Graph 17 zeigt die Seitenkräfte der kurvenäußeren Räder (Einfedern). Der Graph 18 zeigt die Seitenkräfte der kurveninneren Räder (Ausfedern). Die X-Achse stellt den Radweg dar. Die Y-Achse stellt die Seitenkräfte dar. Der Graph 19 zeigt die Summe der beiden Seitenkräfte (kurveninnen/kurvenaußen). Mit zunehmendem Radweg nehmen die jeweilige Seitenkraft der Räder und damit auch die Seitenkraftsumme (Graph 19) zu.

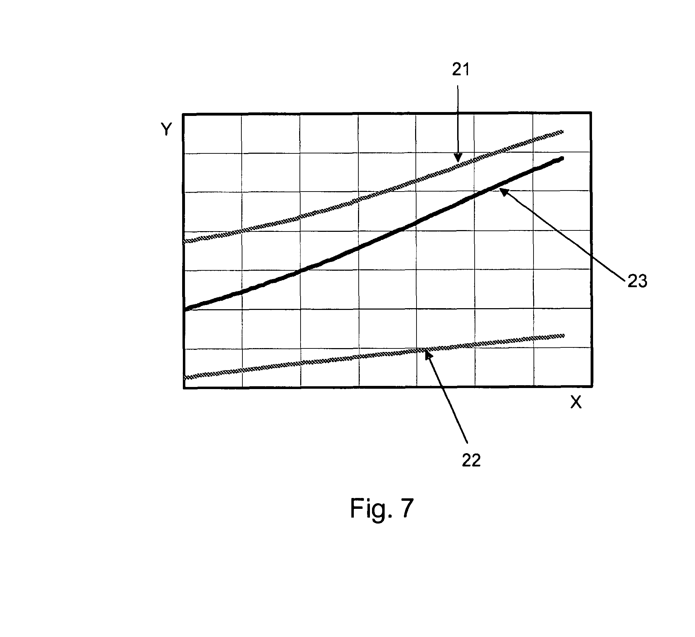

In Figur 7 ist dargestellt, dass die Schraubenfeder, durch die geneigt angeordnete Kraftwirkungslinie 9 gemäß der Erfindung Seitenkräfte erzeugt bzw. aufnimmt, welche den Seitenkräften der Räder entgegen wirkt. Die X-Achse stellt wiederum den Radweg dar, wobei die Y-Achse die Seitenkräfte der Schraubenfeder darstellt. Der Graph 21 stellt die Seitenkräfte der Schraubenfeder des kurvenäußeren Rades (Einfedern) dar. Der Graph 22 stellt die Seitenkräfte der Schraubenfeder des kurveninneren Rades (Ausfedern) dar. Der Graph 23 stellt die Summe der Seitenkräfte der Schraubenfeder dar.

Der Graph 23 aus Figur 7 ist in Figur 8 übertragen, so dass erkennbar ist, dass die Schraubenfeder Seitenkräfte aufnimmt, welche die Belastung der Strukturelemente der Hinterradaufhängung um etwa 30 % reduziert (bezüglich des Graphen 19 auf den Graphen 23), da die Seitenkräfte der Schraubenfeder zu den Seitenkräften der Räder entgegen gerichtet sind. Dies wird einfach erreicht, indem die Kraftwirkungslinie 9 der Schraubenfeder 7 an der kurvenäußeren Seite (Einfedern, Figur 6) stärker geneigt ist als an der kurveninneren Seite (Ausfedern, Figur 5). Das bedeutet, die Schraubenfeder 7 entlastet die Strukturkomponenten der Hinterradaufhängung bzw. der Verbundlenkerachse um 30 % der Gesamtbelastung, welche von Strukturkomponenten einer bekannten Verbundlenkerachse aufgenommen werden müssten.

Insofern zeigen die Figuren 7 und 8, dass wegen der entgegengesetzten Neigung der Kraftwirkungslinie 9 am Kurvenäußeren eine höhere Federseitenkraft generiert als an dem Kurveninneren. Die Belastung der Strukturbauteile kann um 30% reduziert werden. Dieser Effekt kann noch vergrößert werden, wenn zusätzlich eine geometrische Schraubenfederneigung kombiniert wird.

Der bezogen auf Figur 7 in Richtung zur X-Achse verschobene Graph 23 in Figur 8 resultiert aus einem anderem Maßstab der Y-Achse in Figur 8 als in Figur 7. Auch ist in Figur 7 der Schnittpunkt des Graphen 23 mit der Y-Achse bei Null deutlich oberhalb der X-Achse, während der Null-Punkt in Figur 8 der Schnittpunkt zwischen der X-Achse und der Y-Achse ist.

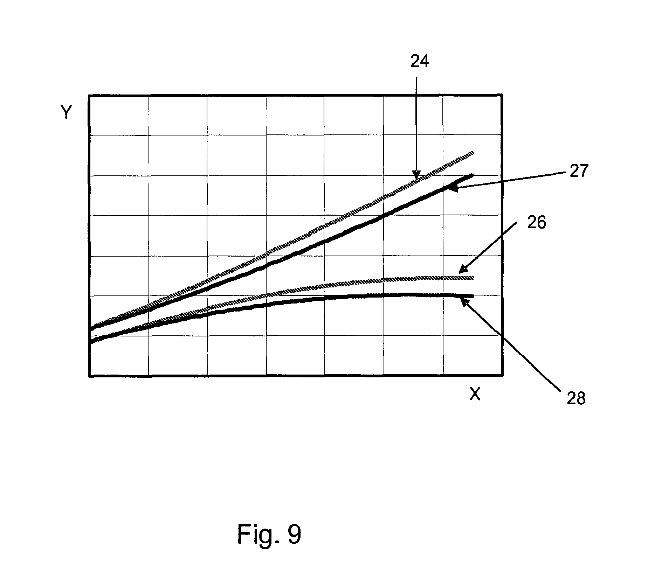

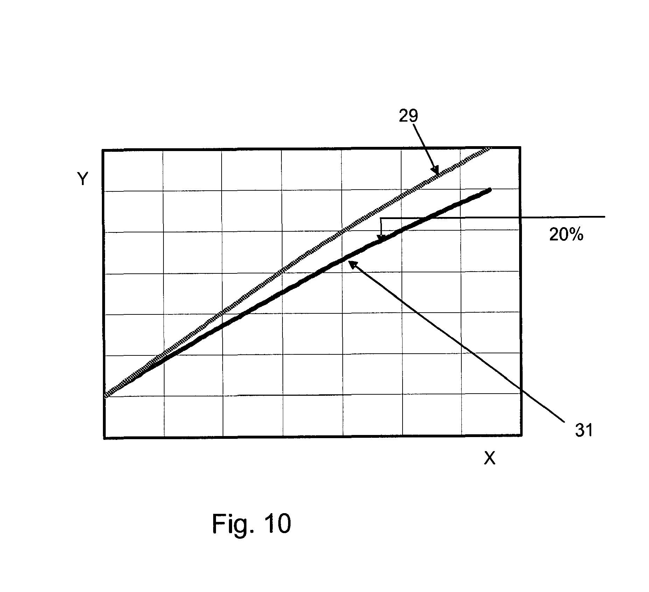

Die Figuren 9 und 10 stellen den Radweg (X-Achse) gegenüber einem Querversatz (Y-Achse) einer Verbundlenkerachse nach dem Stande der Technik im Vergleich zur erfindungsgemäßen Verbundlenkerachse dar. In Figur 9 sind jeweils die kurveninneren und kurvenäußeren aufgetragen. In Figur 10 ist die jeweils gebildete Summe dargestellt.

Der Graph 24 (Figur 9) zeigt einen Querversatz des kurvenäußeren der bekannten Verbundlenkerachse, wobei der Graph 26 einen Querversatz deren kurveninneres zeigt. Analog zeigt Graph 27 einen Querversatz des kurvenäußeren der erfindungemäßen Verbundlenkerachse, wobei der Graph 26 einen Querversatz deren kurveninneres zeigt. Ersichtlich ist, dass bei der erfindungsgemäßen Verbundlenkerachse schon an den kurveninneren und kurvenäußeren geringere Querversatzbeträge erreicht werden, als bei der bekannten Verbundlenkerachse. Dies setzt sich bei den gebildeten Summen fort, wie Figur 10 zeigt. Der Graph 29 zeigt die Summe des Querversatzes der bekannten Verbundlenkerachse, wobei der Graph 31 die Summe des Querversatzes der erfindungsgemäßen Verbundlenkerachse zeigt.

Mit der erfindungemäßen Verbundlenkerachse wird eine Reduzierung um 14% an dem kurvenäußeren und eine Reduzierung um 33% an dem kurveninneren erreicht, wodurch in Summe (Figur 10) eine Reduzierung um 20% (Figur 10) erreicht wird. Mit anderen Worten ist die erfindungsgemäße Verbundlenkerachse in ihrer Nachgiebigkeit verbessert, so dass das Fahrzeug direkter reagiert, und ein "schwammiges" Fahrgefühl zumindest reduziert ist, ohne dass zusätzliche Bauteile vorgesehen werden müssten.

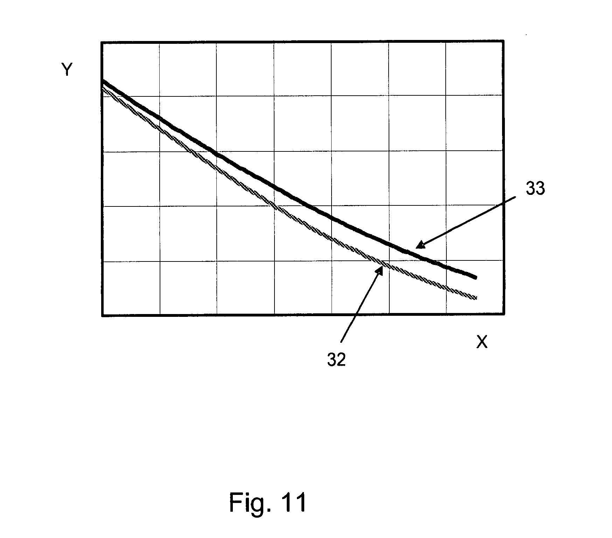

Die Figur 11 zeigt die Auswirkung der erfindungsgemäßen Verbundlenkerachse auf einen Nachspureffekt (Pfeil), welcher bezogen auf die bekannte Verbundlenkerachse um 10% reduziert ist. Die X-Achse stellt den Radweg dar, wobei die Y-Achse die Spur in ° darstellt. Der Graph 32 stellt die Nachspur der bekannten Verbundlenkerachse dar, wobei der Graph 33 die Nachspur der erfindungsgemäßen Verbundlenkerachse darstellt. Erkennbar ist, dass der Nachspureffekt der erfindungsgemäßen Verbundlenkerachse um 10 % reduziert ist.

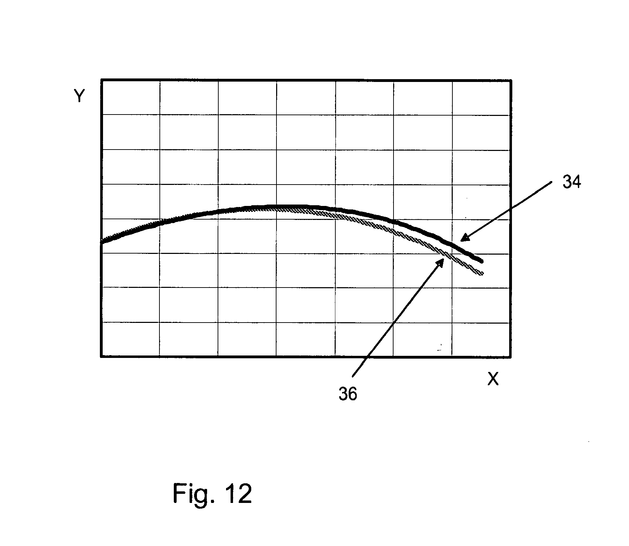

In Figur 12 ist der Effekt der erfindungemäßen Verbundlenkerachse bezüglich des Sturzes (Graph 34) gegenüber der bekannten Verbundlenkerachse (Graph 36) dargestellt. Die X-Achse stellt den Radweg dar, wobei die Y-Achse den Sturz in ° darstellt. Erkennbar ist ein etwas verbesserter Effekt bezüglich reduziertem negativen Sturz wegen der reduzierten vertikal wirkenden Kraft auf den Federsitz um ein Gegenmoment zu erzeugen.

Selbstverständlich sind die genannten Beträge und Zahlenangaben nur beispielhaft und keinesfalls beschränkend zu verstehen.

## Patentansprüche

1. Verbundlenkerachse, welche zwei gezogene Längsschwingen (2) aufweist, die vorn nahe ihrer Drehachse durch ein eingeschweißtes Profil (3) verbunden sind, wobei jeder Längsschwinge (2) eine Schraubenfeder (7) zugeordnet ist, die sich mit ihrem unterem Ende (8) an der jeweiligen Längsschwinge (2) und mit ihrem oberen Ende (10) en einem Fahrzeugaufbau abstützt, wobei die Schraubenfeder (7) eine Federmittellinie und eine Kraftwirkungslinie (9) aufweist, wobei die Schraubenfeder (7) zwischen oberem und unterem Federlagergeneigt montiert ist, und wobei die Schraubenfeder (7) so ausgeführt und angeordnet ist, dass deren Kraftwirkungslinie (9) bei einem Einfedern einen Neigungsbetrag aufweist, welcher zu einem Neigungsbetrag bei einem Ausfedern unterschiedlich ist, wobei die Schraubenfeder (7) in ihrem unteren und oberen Federlager von einem Führungselement geführt wird
**dadurch gekennzeichnet, dass**
ein oberer Durchstoßpunkt der Kraftwirkungslinie (9) durch ein oberes Federlager bezogen auf einen unteren Durchstoßpunkt der Kraftwirkungslinie (9) durch ein unteres Federlager näher an der Federmittellinie angeordnet ist als der untere Durchstoßpunkt, wenn die Schraubenfeder (7) einfedert oder ausfedert und, wobei die Kraftwirkungslinie (9) den oberen Durchstoßpunkt und den unteren Durchstoßpunkt aufweist, die bezogen auf die Federmittellinie gegenüberliegend angeordnet sind, wenn die Schraubenfeder (7) einfedert oder ausfedert, und wobei die Kraftwirkungslinie (9) bei Kurvenfahrt an einer kurvenäußeren Seite bei dem Einfedern stärker geneigt ist als an einer kurveninneren Seite bei dem Ausfedern.

2. Verbundlenkerachse nach Anspruch 1,
**dadurch gekennzeichnet, dass**
die Schraubenfeder (7) eine Seitenkraft erzeugt, welche jeweils Seitenkräften von Rädern entgegen gerichtet ist, wenn die Schraubenfeder (7) einfedert oder ausfedert.

3. Verbundlenkerachse nach Anspruch 1 oder 2,
**dadurch gekennzeichnet, dass**
der Neigungsbetrag der Kraftwirkungslinie (9) bei einem Einfedern größer ist als bei einem Ausfedern.

4. Verbundlenkerachse nach einem der vorhergehenden Ansprüche,
**dadurch gekennzeichnet, dass**
die jeweilige Kraftwirkungslinie (9) einer jeden Schraubenfeder (7) der Hinterradaufhängung (5) eine entgegen orientierte Neigung, bevorzugt gleichen Betrages aufweisen, wenn die Feder (7) weder ein- noch ausfedert.

5. Verbundlenkerachse nach einem der vorhergehenden Ansprüche,
**dadurch gekennzeichnet, dass**
das obere und/oder das untere Federlager winklig angestellt ist.

## Claims

1. Torsion beam axle which has two trailing longitudinal swing arms (2) which are connected at the front, close to their axis of rotation, by a welded-in profile (3), each longitudinal swing arm (2) being assigned a coil spring (7) which is supported with its lower end (8) on the respective longitudinal swing arm (2) and with its upper end (10) on a vehicle body, the coil spring (7) having a spring centre line and a force action line (9), the coil spring (7) being mounted in a tilted manner between upper and lower spring bearing, and the coil spring (7) being configured and arranged in such a way that, during compression, its force action line (9) has an amount of tilt which is different from an amount of tilt during rebound, the coil spring (7) being guided in its lower and upper spring bearing by a guide element, **characterized in that** an upper piercing point of the force action line (9) by an upper spring bearing is arranged closer to the spring centre line, in relation to a lower piercing point of the force action line (9) by a lower spring bearing, than the lower piercing point when the coil spring (7) compresses or rebounds, and the force action line (9) having the upper piercing point and the lower piercing point which are arranged so as to lie opposite one another in relation to the spring centre line when the coil spring (7) compresses or rebounds, and, when driving around a bend, the force action line (9) being tilted to a more pronounced extent on a side to the outside of the bend during compression than on a side to the inside of the bend during rebound.

2. Torsion beam axle according to Claim 1, **characterized in that** the coil spring (7) produces a lateral force which is directed counter in each case to lateral forces of wheels when the coil spring (7) compresses or rebounds.

3. Torsion beam axle according to Claim 1 or 2, **characterized in that** the amount of tilt of the force action line (9) is greater during compression than during rebound.

4. Torsion beam axle according to one of the preceding claims, **characterized in that** the respective force action line (9) of each coil spring (7) of the rear wheel suspension system (5) has a tilt which is oriented counter to one another, preferably of the same amount, when the spring (7) neither compresses nor rebounds.

5. Torsion beam axle according to one of the preceding claims, **characterized in that** the upper and/or the lower spring bearing are/is preloaded at an angle.

## Revendications

1. Essieu arrière à traverse déformable en torsion, qui présente deux bras oscillants longitudinaux tirés (2) qui sont reliés à l'avant à proximité de leur axe de rotation par un profilé soudé (3), chaque bras oscillant longitudinal (2) étant associé à un ressort à boudin (7) qui s'appuie par son extrémité inférieure (8) sur le bras oscillant longitudinal respectif (2) et par son extrémité supérieure (10) sur une carrosserie du véhicule, le ressort à boudin (7) présentant un axe médian de ressort et une ligne d'action de force (9), le ressort à boudin (7) étant monté de manière inclinée entre un palier de ressort supérieur et un palier de ressort inférieur, et le ressort à boudin (7) étant réalisé et disposé de telle sorte que sa ligne d'action de force (9) présente une valeur d'inclinaison lors de la compression du ressort qui est différente d'une valeur d'inclinaison lors de la détente du ressort, le ressort à boudin (7) étant guidé dans son palier de ressort inférieur et son palier de ressort supérieur par un élément de guidage,
**caractérisé en ce**
**qu'**un point de passage supérieur de la ligne d'action de force (9) à travers un palier de ressort supérieur est disposé par rapport à un point de passage inférieur de la ligne d'action de force (9) à travers un palier de ressort inférieur plus près de l'axe médian du ressort que le point de passage inférieur, lorsque le ressort à boudin (7) est comprimé ou détendu, et la ligne d'action de force (9) présentant le point de passage supérieur et le point de passage inférieur qui sont disposés de manière opposée l'un à l'autre par rapport à l'axe médian du ressort lorsque le ressort à boudin (7) est comprimé ou détendu, et la ligne d'action de force (9) étant plus fortement inclinée en conduite en virage d'un côté extérieur du virage lors de la compression du ressort que d'un côté intérieur du virage lors de la détente du ressort.

2. Essieu arrière à traverse déformable en torsion selon la revendication 1,
**caractérisé en ce que**
le ressort à boudin (7) produit une force latérale qui est à chaque fois orientée à l'encontre de forces latérales des roues lorsque le ressort à boudin (7) est comprimé ou détendu.

3. Essieu arrière à traverse déformable en torsion selon la revendication 1 ou 2,
**caractérisé en ce que**
la valeur d'inclinaison de la ligne d'action de force (9) lors d'une compression du ressort est supérieure à la valeur lors d'une détente du ressort.

4. Essieu arrière à traverse déformable en torsion selon l'une quelconque des revendications précédentes,
**caractérisé en ce que**
les lignes d'action de force respectives (9) de chaque ressort à boudin (7) de la suspension de roues arrière (5) présentent une inclinaison orientée en sens inverse, de préférence de même valeur, lorsque le ressort (7) n'est ni comprimé ni détendu.

5. Essieu arrière à traverse déformable en torsion selon l'une quelconque des revendications précédentes,
**caractérisé en ce que**
le palier de ressort supérieur et/ou inférieur est incliné suivant un certain angle.
